(19) Europäisches Patentamt
European Patent Office
Office européen des brevets

(11) Publication number: 0 430 686 A2

# (12) EUROPEAN PATENT APPLICATION

(21) Application number: 90312974.0

(51) Int. Cl.[5]: C09K 9/02, G02F 1/17

(22) Date of filing: 29.11.90

(30) Priority: 29.12.89 US 459142
29.11.89 US 443113

(43) Date of publication of application:
05.06.91 Bulletin 91/23

(84) Designated Contracting States:
DE FR GB IT

(71) Applicant: DONNELLY CORPORATION
414 East Fortieth Street
Holland Michigan 49423 (US)

(72) Inventor: Varaprasad, Desaraju V.
327 Ridgeland Court, Apt. 2
Holland, Michigan 49423 (US)
Inventor: Lynam, Niall R.
248 Foxdown
Holland, Michigan 49424 (US)
Inventor: Habibi, Hamid R.
2630 Knagspough
Holland, Michigan 49424 (US)
Inventor: Desaraju, Padma
327 Ridgeland Court, Apt. 2
Holland, Michigan 49423 (US)

(74) Representative: Sheard, Andrew Gregory et al
Kilburn & Strode 30, John Street
London WC1N 2DD (GB)

(54) **Electrochemichromic viologens.**

(57) Electrochemichromic solutions, and devices containing such solutions contain viologens whose solubility can be enhanced by the use of hexafluorophosphate ($PF_6^-$) or hexafluoroarsenate ($AsF_6^-$), or a mixture thereof as a counterion.

EP 0 430 686 A2

# ELECTROCHEMICHROMIC VIOLOGENS

The present invention relates to electrochemichromic solutions and devices containing such solutions. Such solutions are designed to either colour or clear, depending on desired application, under the influence of applied voltage.

Such devices have been suggested for use as rearview mirrors in automobiles such that in night driving conditions, application of a voltage would darken a solution contained in a cell incorporated into the mirror (United States Patent 3,280,701, October 25, 1966). Similarly, it has been suggested that windows incorporating such cells could be darkened to block out sunlight, and then allowed to lighten again at night. Electrochemichromic cells have been used as display devices and have been suggested for use as antidazzle and fog-penetrating devices in conjunction with motor vehicle headlamps (British Patent Specification 328017, May 15, 1930).

United States Patent 4,090,782 to Bredfeldt et al., United States Patent 4,572,119 to Ueno et al. (June 1988), Chemical Abstract 86: 196871c, 72-Electro. Chemistry, Vol. 86, 1977, I.V. Shelepin et al. in Electrokhimya, 13 (3), 404-408 (March 1977), O.A. Ushakov et al., Electrokhimya, 14(2), 319-322 (February 1978), U.S.S.R. Patent 566863 to Shelepin (August 1977), United States Patent 3,451,741 to Manos, European Patent Publication 240,226 published October 7, 1987 to Byker, United States Patent 3,506,229 to Schoot et al., United States Patent 4,093,358 to Shattuck et al., European Patent Publication 0012419 published June 25, 1980 to Shattuck, and United States Patent 4,139,276 to Clecak et al. all disclose electrochemichromic solutions of anodic and cathodic electrochromically colouring components which provide self-erasing, high colour contrast, single compartment cells. Such anodic and cathodic colouring components comprise redox couples selected to exhibit the following reaction :

$$\underset{\substack{\text{(Colourless)}\\ \text{(Low energy pair)}}}{RED_1 + OX_2} \;\underset{\text{voltage}}{\rightleftarrows}\; \underset{\substack{\text{(Coloured)}\\ \text{(High Energy Pair)}}}{OX_1 + RED_2}$$

The redox couple is selected such that the equilibrium position of the mixture thereof lies completely to the left of the equation. At rest potential, the anodically colouring reductant species $RED_1$, and the cathodically colouring oxidant species $OX_2$ are colourless. To cause a colour change, voltage is applied and the normally colourless $RED_1$ is anodically oxidized to its coloured antipode $OX_1$, while, simultaneously, $OX_2$ is cathodically reduced to its coloured antipode, $RED_2$. These cathodic/anodic reactions occur preferentially at the electrodes which, in practical devices, are typically transparent conductive electrodes. Within the bulk of the solution, the redox potentials are such that when $RED_2$ and $OX_1$ come together, they revert to their lower energy form.

This means the applied potential need only suffice to drive the above reaction to the right. On removing the potential, the system reverts to its low energy state and the cell spontaneously self-erases.

Such redox pairs are placed in solution in an inert solvent. Typically, an electrolyte is also added. This solution is then placed into a relatively thin cell, between two conductive surfaces. In most applications, at least one of the conductive surfaces comprises a very thin layer of a transparent conductor such as indium tin oxide (ITO), doped tin oxide or doped zinc oxide deposited on a glass substrate so that the cell is transparent from at least one side. If the device is to be used in a mirror, the second surface is typically defined by a relatively thin layer of transparent conductor such as indium tin oxide, doped tin oxide or doped zinc oxide deposited on another glass substrate, which is silvered or aluminized or otherwise reflector coated on its opposite side. In the case of solar control windows, the second glass substrate would of course not be silvered on its opposite side so that when the redox pair is colourless, the window would be entirely transparent.

In some applications, as for example as outside rearview mirrors or as windows, such electrochemichromic devices must withstand substantial temperature extremes. This creates a problem for the viologens, which are often recommended as the cathodically colouring ingredient. It is desirable when formulating electrochemichromic solutions that utilize viologens as the cathodically colouring species that the viologen concentration be high so that devices filled with said viologen based electrochemichromic solutions colour deeply and rapidly when voltage is applied. Viologen solubility in typical electrochemichromic solutions is sufficiently marginal that there is a tendency for the viologens in concentrated solutions to precipitate out when the temperature drops. It would be desirable to increase viologen solubility in such electrochemichromic solutions.

European patent publication 240,226 (Byker) published October 7, 1987 teaches the use of viologens combined with a counterion selected from chloride, bromide, iodide, $BF_4^-$, $PF_6^-$, $AsF_6^-$, $C_{104}^-$ and $NO_3^-$. The docu-

ment fails to distinguish $PF_6^-$, and $AsF_6^-$ from the six other counterions cited. The document fails to appreciate that an increase in viologen solubility which can be achieved using these specific counterions. The highest viologen concentration even suggested is 0.1 molar and the highest concentration actually reported is 0.05 molar.

According to a first aspect of the present invention there is provided an electrochemichromic solution comprising a solvent and a redox chemical pair (which will generally be in solution in the solvent) which is capable of being coloured or colourless depending on any voltage applied to the solution, one of the redox pair being a viologen hexafluorophosphate or a viologen hexafluoroarsenate, or a mixture thereof. Thus, preferred solutions colour in the presence of an applied voltage and are colourless (and thus may bleach) to a colourless condition in the absence of an applied voltage. Thus, preferred solutions can be made to change from a coloured state to a colourless state, or vice versa, by changing the voltage applied to the solution.

It is preferred that the viologen is an aryl (e.g. phenyl or phenylalkyl) viologen or an alkyl (e.g. $C_{1-8}$alkyl) viologen. A particularly preferred viologen is methylviologen.

The viologen is preferably present in the solution at the concentration of at least 0.05 M and preferably at least 0.1 M.

The solvent suitably comprises at least 25% by volume of propylene carbonate (PC), 3-hydroxypropionitrile (HPN), 3,3'-oxydipropionitrile (ODPN), 2-acetylbutyrolactone (ABL), 3-methylsulpholane (MS) or 2-methylglutaronitrile (MGNT), or a mixture thereof. The solvent is preferably 2-acetylbutyrolactone.

The redox chemical pair can be thought of as a cathodic member (which may be added in the form of a salt, such as a viologen salt) and an anodic member. It is preferred that the cathodic member is a viologen, which may be accompanied by a counterion, such as methylviologen hexafluorophosphate and hexafluoroarsenate, or ethylviologen hexafluorophosphate and hexafluoroarsenate.

Thus the present invention encompasses, in its broadest aspect, an electrochemichromic solution comprising a solvent and a redox chemical pair, the redox pair comprising a cathodic member which is a viologen and a fluorophosphate and/or fluoroarsenate counterion, and an anodic member.

A preferred anodic member is 5,10, dihydro-5,10-dimethyl phenazine.

The solvent will preferably contain one or more electrolytes. These are suitably provided at a concentration of up to 0.05 M. Preferred concentrations of electrolytes range from 0.01 to 0.04 M. Suitably electrolytes include fluorophosphate and/or fluoroarsenates.

The concentration of the cathodic member will generally be the same as the concentration of counterion, and it is preferred that the cathodic member and counterion provided in the solution is in the form of a salt. Thus, preferred concentrations of the cathodic member (such as a viologen) and/or the counterion are at least 0. 05 M, such as at least 0. 1 M.

The solution may also be provided with an ultraviolet (UV) stabiliser. Preferred stabilisers include benzotriazoles, benzophenones or even hindered amine complexes. The stabiliser may be suitably provided at a concentration of from 1 to 10%, e.g. 3 to 7%, and optimally from 4 to 6%, by weight.

Preferred anionic members of the redox chemical pair include phenazines, e.g. di($C_{1-8}$)alkyl phenazines, diamines such as phenylene diamines, benzadines such as tetra($C_{1-8}$)alkyl benzadines, and fulvalenes. Phenazines are preferred.

In the present invention, it has been surprisingly found that viologen solubility can be strikingly increased using hexafluorophosphate or hexafluoroarsenate as the viologen counterion. This may enable one to increase the viologen concentration in the solution and obtain more deeply colouring solutions, without having to worry about excessive precipitation of the viologen as the environmental temperature decreases.

In preferred embodiments, viologen hexafluorophosphate or hexafluoroarsenate is dissolved in a suitable solvent along with an anodically colouring compound and preferably an electrolyte. UV stabilizers, thickeners and other additives may optionally be included.

Viologens which are useful in electrochemichromic solutions have the following general formula :

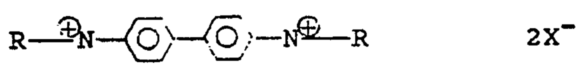

where R is an aryl (e.g. alkyl phenyl) or alkyl group (e.g. alkyl represents $C_{1-8}$alkyl) such as methyl, benzyl or heptyl. $X^-$ shown in the above structural formula is the so-called counterion to the positively charged viologen ion. By using hexafluorophosphate ($PF_6^-$) or hexafluoroarsenate ($AsF_6^-$) as the counterion, the viologen solubility in electrochemichromic solvents may be surprisingly increased.

Suitable anionic (anodic colouring) compounds for use in conjunction with the cationic (cathodically colouring) viologens include :

(a) phenazines, e.g. ($C_{1-8}$)alkyl phenazines :

DMPA - 5,10-dihydro-5,10-dimethylphenazine $R=CH_3$
DEPA - 5,10-dihydro-5,10-diethylphenazine $R=C_2H_5$
DOPA - 5,10-dihydro-5,10-dioctylphenazine $R=C_8H_{17}$

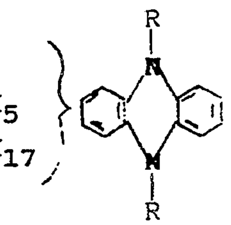

(b) diamines, e.g. phenylene diamines
TMPD - N,N,N',N'-tetramethylphenylenediamine

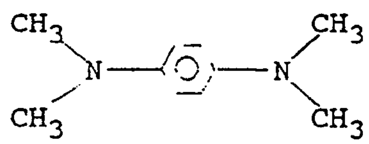

Npt

(c) benzadines, e.g. tetra($C_{1-8}$)alkyl benzidines :
TMBZ - N,N'-tetramethylbenzidine

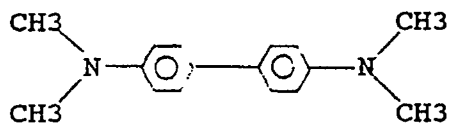

(d) fulvalenes, e.g.
TTF - Tetrathiafulvalene

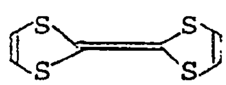

Most preferred is of 5,10-dihydro-5,10-dimethylphenazine (DMPA), e.g. 0.02 to 0.03 M, such as 0.025 molar solution.

Numerous electrolytes can be used in the present invention. Some which are often suggested for electrochemichromic cells and which is acceptable in accordance with the preferred embodiment of the invention are fluorophosphates or fluoroarsenates, e.g. ammonium fluorophosphates or fluoroarsenates and optimally tetra($C_{1-8}$alkyl)ammonium fluorophosphates or fluoroarsenates such as tetrabutylammonium hexafluorophosphate and tetrabutylammonium hexafluoroarsenate. Preferred concentrations are from 0.01 to 0.04 M, e.g. 0.02 to 0.03 M, such as about a 0.025 molar solution.

UV stabilizers such as Uvinul™ 400, Cyasorb 24™, Tinuvin 327™, Uvinul D-49™, Uvinul D-50™, Uvinul M-40™, Tinuvin 328™, Tinuvin 1130™, Tinuvin P™ and similar commercially available UV stabilizers can also be used in the solutions of the present invention at concentrations up to 30% weight/volume such as up to 15% weight/volume or thereabouts.

The most preferred electrochemichromic solution contemplated for practicing the invention comprises a solvent containing from 0.02 M to 0.14 M, most preferably about 0.075 M molar methylviologen hexafluorophosphate or hexafluoroarsenate, from 0.02 M to 0.14 M, most preferably about 0.075 M molar tetrabutylammonium hexafluorophosphate or hexafluoroarsenate, and from 0.02 M to 0.14 M, most preferably about 0.075 M molar 5,10-dihydro-5,10-dimethylphenazine (DMPA).

A second aspect of the present invention relates to an electrochemichromic device containing an electrochemichromic solution of the first aspect. The device is suitably a mirror, cell (such as a solar cell) or a window.

Thus a preferred electrochemichromic device comprises :

at least two spaced apart plates, each plate having an inwardly facing conductive surface (for example tin oxide, zinc oxide or (preferably) a tin-indium oxide (ITO) surface), the electrochemichromic solution being that

of the first aspect.

If the device is a mirror, one of the plates may have a silver or aluminium coating on an outwardly facing surface. The plates are suitably from 50 to 250, such as 100 to 200, and optimally from 130 to 170, microns apart.

Preferred features and characteristics of the second aspect are as for the first mutatis mutandis.

A third aspect of the present invention relates to a method of increasing the solubility of a viologen in an electrochemichromic solution, the method comprising providing hexafluorophosphate ($PF_6^-$) or hexafluoroarsenate ($AsF_6^-$), or a mixture thereof, as a viologen counterion. The solution is preferably a solution of the first aspect.

A fourth aspect of the present invention relates to a process for the preparation of an electrochemichromic solution of the first aspect, the process comprising admixing the redox chemical pair and the solvent.

Preferred features and characteristics of one aspect are as for the second aspect mutatis mutandis.

The invention will now be described by way of example with reference to the accompanying drawing and accompanying Examples which are provided by way of illustration and are not to be construed as being limiting.

FIGURE 1 is a section view of an electrochemichromic cell in accordance with the present invention.

## EXAMPLE A

Figure 1 illustrates a typical electrochemichromic cell 1 containing a solution of the present invention. Cell 1 comprises a pair of glass plates 10 and 11 each coated on its inwardly facing surface with a half wave indium tin oxide (ITO) coating 12 of about 15 ohms/square sheet resistance. Plates 10 and 11 are separated by peripheral seal 13 so that the interior of the cell has a thickness of 150 microns. Cell 1 is sealed at its perimeter by peripheral seal 13. Seal 13 comprises an epoxy material, to which 150 micron diameter spacers are added, and silk-screened to a thickness of about 150 microns. Glass beads are used as spacers. As shown, cell 1 is intended to be used as a mirror, and thus the rear surface of glass plate 11 is coated with a silver reflector layer 14. If the device were used as a window, layer 14 would be deleted. The conductive indium tin oxide layers 12 are connected to electrical terminals 15 and 16 so that a voltage can be established across a solution located between plates 10 and 11 in cell 1.

## COMPARATIVE EXAMPLE 1

In Table 1 below, the solubility of methylviologen employing various alternative counterions has been determined in various solvents suggested for use in electrochemichromic solutions. Propylene carbonate (PC) is a commonly recommended solvent for use in electrochemichromic solutions. We have also used in Table 1 2-acetylbutyrolactone (ABL), 3,3'-oxydipropionitrile (ODPN), and 3-hydroxypropionitrile (HPN), and in Table 2 3-methylsulfolane (MS) and 2-methylglutaronitrile (MGNT). Other solvents have been suggested in the art for use in electrochemichromic solutions. These may also be applicable in the broader aspects of the present invention. The counterions compared to hexafluorophosphate and hexafluoroarsenate were perchlorate ($C_{104}^-$), tetrafluoroborate ($BF_4^-$), trifluoromethylsulfonate ($CF_3SO_3^-$) and chloride ($Cl^-$).

Table 1 gives the solubility for various viologens both in terms of moles per litre and percent weight/volume. It can be seen that methylviologen using either hexafluorophosphate or hexafluoroarsenate as the counterion is more soluble at 25°C. than any of the other methylviologen-counterion combinations. This is true for all the solvents used. In the commonly recommended propylene carbonate solvent, the solubility of methylviologen hexafluorophosphate is about twice as great as is the solubility of methylviologen tetrafluoroborate. That contrast is even more striking in the solvents ODPN and ABL.

The practical benefit that results from use of electrochromic viologens that utilize hexafluorophosphate or hexafluoroarsenate as the counterion can be appreciated by reference to Table 2. Electrochemichromic window cell 1 (Figure 1) was used for this data. Cell area was about 110 $cm^2$ and thickness was about 150 microns. Sheet resistance of the ITO transparent conductors used in the cell was 15 ohms per square. The electrochemichromic solutions used the solvents indicated in column 1 of Table 2. The anodic electrochemichromic species was 5,10-dihydro-5,10-dimethylphenazine and the cathodic electrochemichromic species was methylviologen utilising the counterions indicated in column 2. The concentration (molarity) of the cathodic and anodic species (individually) in the solution is given in column 3. The % transmission (measured at the cell centre and using Standard Illuminant A as a light source and a detector that reproduced the eye's photopic response) at zero applied potential is given in column 4. Column 5 gives the % transmission level to which the cell dims when 1 volt is applied across the ITO transparent conductors that sandwich the electrochemichromic solution in the window cell. Column 6 reports the status of the solution after storage for several days at room temperature. Column 7 reports the status of the solution after cold storage at -20°C. for several days. "No ppt"

indicates that no precipitate was noted after several days storage at the indicated temperatures. "Slight ppt" indicates only slight precipitation was seen after storage. "More ppt" indicates that more precipitation was seen when stored at -20°C. relative to when that cell filled with that same solution was stored at room temperature. "Very slight ppt" indicates that only very slight precipitation was seen after storage.

Examination of the data in Table 2 shows that use of hexafluorphosphate or hexafluoroarsenate as the counterion consistently enables use of higher solution concentrations, and thereby enabled electrochemichromic windows that dimmed to a lower transmission when powered. For example, with 2-acetylbutyrolactone, a solution that used 0.07 M perchlorate counterion precipitated at room temperature whereas $PF_6$ solutions as high as 0.12 M concentration and $AsF_6$ solutions as high as 0.14 M concentration remained in solution, even after prolonged storage at -20°C. Indeed, the solutions of Table 2 that involved ABL (2-acetylbutyrolactone) as solvent, or as a solvent component in a mixture, performed particularly well when hexafluorophosphate or hexafluoroarsenate salts of methylviologen were used in the electrochemichromic solution. As indicated in Table 2 the solutions of the present invention display dark colouring windows and their use at low temperatures, can be achieved when hexafluorophosphate or hexafluoroarsenate are used as counterions.

These benefits can also be found with whatever viologen the hexafluorophosphate or hexafluoroarsenate is combined with as the counterion. As shown in Table 3, higher solubility was achieved using hexafluorophosphate and hexafluoroarsenate regardless of whether methyl, benzyl or ethylviologen was used.

**Table 1**

(at 25° C.)
Solubility Of Methylviologen: A Comparison Of The Effect
Of Different Counterions ($ClO_4^-$, $PF_6^-$, $BF_4^-$, $AsF_6^-$ $CF_3SO_3^-$, $Cl^-$)

| Mol.Wt<br>Solvent | (476)<br>$MVPF_6$ | | (484)<br>$MVCF_3SO_3$ | | (564)<br>$MVAsF_6$ | | (385)<br>$MVClO_4$ | | (360)<br>$MVBF_4$ | | (257)<br>$MVCl$ | |
|---|---|---|---|---|---|---|---|---|---|---|---|---|
| | mol/lit ($ML^{-1}$) | % (w/v) | mol/lit ($ML^{-1}$) | % (w/v) | mol/lit ($ML^{-1}$) | % (w/v) | mol/lit ($ML^{-1}$) | % (w/v) | mol/lit ($ML^{-1}$) | % (w/v) | mol/lit ($ML^{-1}$) | % (w/v) |
| PC | 0.29 | 13.7 | 0.07 | 3.2 | 1.03 | 57.9 | 0.14 | 5.5 | 0.17 | 6.0 | 0 | 0 |
| ODPN | 0.29 | 13.7 | 0 | 0 | 0.34 | 19.1 | 0.07 | 2.5 | 0.10 | 3.7 | 0 | 0 |
| ABL | 0.35 | 16.4 | 0 | 0 | 0.72 | 40.4 | 0.06 | 2.1 | 0.12 | 4.2 | 0 | 0 |
| HPN | 0.50 | 24.0 | 0.50 | 24.0 | 0.34 | 19.1 | 0.29 | 11.0 | 0.34 | 12.1 | 0.55 | 14.0 |

16

TABLE 2

| Solvent | Counterion | Concentration | Transmission % T At Zero Potential | Transmission % T With 1V Applied | Solubility: Storage At Room Temperature | Solubility: Storage At -20° C. |
|---|---|---|---|---|---|---|
| PC | $ClO_4$ | 0.05M | 83.2 | 14.5 | No ppt | No ppt |
| | $ClO_4$ | 0.07M | 80.2 | 13.6 | Slight ppt | More ppt |
| | $PF_6$ | 0.14M | 70.0 | 10.3 | Very slight ppt | Slight ppt |
| | $AsF_6$ | 0.14M | 69.2 | 7.4 | No ppt | No ppt |
| HPN | $ClO_4$ | 0.05M | 84.1 | 9.7 | Slight ppt | More ppt |
| | $PF_6$ | 0.1M | 79.7 | 7.6 | Very slight ppt | Slight ppt |
| | $AsF_6$ | 0.1M | 81.2 | 9.8 | No ppt | Very slight ppt |
| | $AsF_6$ | 0.12M | 80.4 | 8.0 | No ppt | Very slight ppt |
| ODPN | $ClO_4$ | 0.05M | 83.0 | 4.1 | Slight ppt | More ppt |
| | $PF_6$ | 0.1M | 75.7 | 0.25 | No ppt | No ppt |
| | $AsF_6$ | 0.1M | 75 | 0.1 | Very slight ppt | Slight ppt |
| | $AsF_6$ | 0.12M | 72.1 | 0.1 | No ppt | Very slight ppt |
| MS | $ClO_4$ | 0.05M | 83.6 | 13.3 | Slight ppt | More ppt |
| | $PF_6$ | 0.1M | 79.8 | 0.1 | No ppt | Very slight ppt |
| | $AsF_6$ | 0.1M | 78.6 | 0 | No ppt | Very slight ppt |
| | $AsF_6$ | 0.12M | 75.6 | 0 | No ppt | Very slight ppt |
| MGNT | $ClO_4$ | 0.05M | 84.4 | 44 | ppt | More ppt |
| | $PF_6$ | 0.1M | 75.2 | 1 | No ppt | No ppt |
| | $AsF_6$ | 0.1M | 74.8 | 1 | No ppt | No ppt |
| ABL | $ClO_4$ | 0.05M | 84.4 | 4.8 | No ppt | No ppt |
| | $ClO_4$ | 0.07M | 80.4 | 3.5 | ppt | More ppt |
| | $PF_6$ | 0.1M | 77.0 | 1.8 | No ppt | No ppt |
| | $PF_6$ | 0.12M | 73.8 | 1.3 | No ppt | No ppt |
| | $AsF_6$ | 0.1M | 76.5 | 4.1 | No ppt | No ppt |
| | $AsF_6$ | 0.12M | 74.0 | 1.6 | No ppt | No ppt |
| | $AsF_6$ | 0.14M | 70.4 | 0.8 | No ppt | No ppt |
| HPN/ABL 50:50 | $ClO_4$ | 0.05M | 82.4 | 5.9 | No ppt | No ppt |
| | $PF_6$ | 0.1M | 74.8 | 5.3 | No ppt | No ppt |
| | $AsF_6$ | 0.1M | 74.6 | 4.8 | No ppt | No ppt |

ABL = 2-acetylbutyrolactone

PC = Propylene carbonate
HPN = 3-Hydroxypropionitrile
ODPN = 3,3'-oxydipropionitrile
MS = 3-methylsulfolane
MGNT = 2-methylglutaronitrile

$ClO_4$ = Perchlorate
$PF_6$ = Hexafluorophosphate
$AsF_6$ = Hexafluoroarsenate

Table 3

Solubility (moles/litre)

| | $MVPF_6$ | $EVPF_6$ | $BVPF_6$ | $MVAsF_6$ | $EVAsF_6$ | $BVAsF_6$ |
|---|---|---|---|---|---|---|
| PC | 0.29 | 0.99 | 0.83 | 1.03 | 1.0 | 1.25 |
| HPN | 0.50 | 0.45 | 0.36 | 0.34 | 0.63 | 0.42 |
| ABL | 0.35 | 0.56 | 0.50 | 0.72 | 0.71 | 1.00 |
| ODPN | 0.29 | 0.35 | 0.42 | 0.34 | 0.56 | 0.62 |

$MVPF_6$ = Methylviologen hexafluorophosphate
$EVPF_6$ = Ethylviologen hexafluorophosphate
$BVPF_6$ = Benzylviologen hexafluorophosphate

$MVAsF_6$ = Methylviologen hexafluoroarsenate
$EVAsF_6$ = Ethylviologen hexafluoroarsenate
$BVAsF_6$ = Benzylviologen hexafluoroarsenate

## Claims

1. An electrochemichromic solution comprising a solvent and a redox chemical pair which is capable of being coloured or colourless depending on any voltage applied to the solution, one of the redox pair comprising a viologen hexafluorophosphate or a viologen hexafluoroarsenate or a mixture thereof.

2. An electrochemichromic solution as claimed in claim 1 wherein the viologen is methylviologen.

3. An electrochemichromic solution as claimed in claim 1 or 2 wherein the viologen is in solution at a concentration of at least 0.05 M.

4. An electrochemichromic solution as claimed in any of claims 1 to 3 wherein the solvent comprises at least 25% by volume of propylene carbonate, 3-hydroxypropionitrile, 3,3′-oxydipropionitrile, 2-acetylbutyrolactone, 3-methylsulpholane or 2-methylglutaronitrile, or a mixture thereof.

5. An electrochemichromic solution as claimed in any of claims 1 to 4 wherein the solvent is substantially entirely 2-acetylbutyrolactone.

6. An electrochemichromic solution as claimed in any of claims 1 to 5 wherein a cathodic member of the redox chemical pair in solution is methylviologen hexafluorophosphate and hexafluoroarsenate or ethylviologen hexafluorophosphate and hexafluoroarsenate, or a mixture thereof and/or an anodic member is 5,10-dihydro-5,10-dimethylphenazine.

7. An electrochemichromic device comprising :
at least two spaced apart plates, each plate having an inwardly facing conductive surface, and an electrochemichromic solution located in the device between said inwardly facing conductive surfaces, the solution comprising a solvent and a redox chemical pair which is capable of being coloured or colourless depending on any voltage applied to the solution, one of the redox pair being a viologen hexafluorophosphate or a viologen hexafluoroarsenate or a mixture thereof.

8. An electrochemichromic device as claimed in claim 7 wherein the solution is a solution as claimed in any of claims 2 to 6.

9. A method of increasing the solubility of a viologen in an electrochemichromic solution the method comprising comprising providing hexafluorophosphate ($PF_6^-$), or hexafluoroarsenate ($AsF_6^-$) or a mixture thereof, as the viologen counterion.

10. A method as claimed in claim 9 wherein the solution is as claimed in any of claims 1 to 6.

11. A process for the preparation of an electrochemichromic solution as claimed in any of claims 1 to 6, the process comprising admixing the redox pair and solvent.

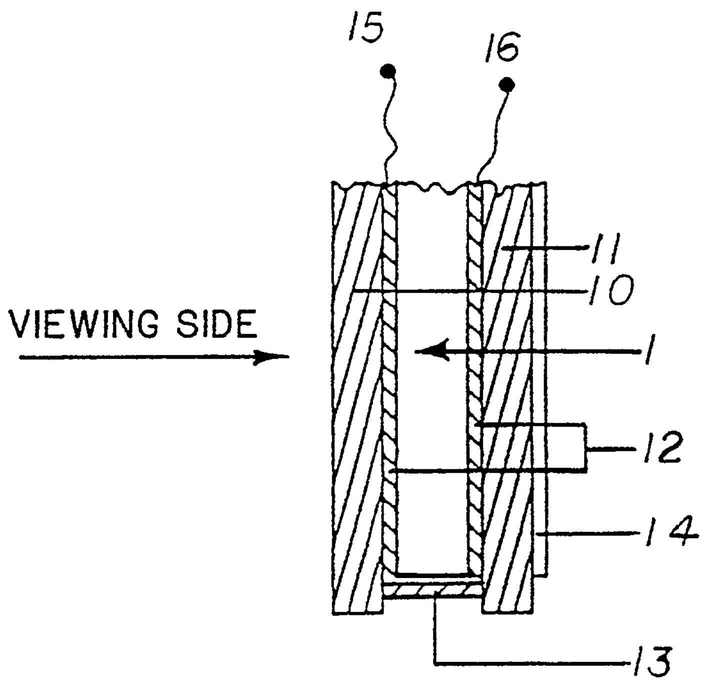


Fig 1